# EUROPEAN PATENT APPLICATION

(11) **EP 1 925 414 A2**
(43) Date of publication of application: **28.05.2008**
(21) Application number: 07005485.3
(22) Date of filing: 16.03.2007
(51) Int. Cl.: B28C 5/18, B28C 5/08

(54) **Concrete mixer**

(30) Priority: 21.11.2006 IT FI20060075
(71) Applicant: Imer International S.p.A., 53036 Poggibonsi (SI) (IT)
(72) Inventor: Coli, Roberto, 50052 Certaldo FI (IT); Bandini, Leandro, 50052 Certaldo FI (IT)
(74) Representative: Strasser, Wolfgang

(57) **Abstract**

Concrete mixer comprising a support structure (1), a drum (2), a drum-holder (3) joined to structure (1) so that it can rotate about a horizontal axis (x-x), and an electric motor whose operation determines the rotation of the drum (2) about a corresponding rotation axis (y-y), characterised in that said electric motor (4) is directly connected on axis (y-y) of drum (2).

## Description

The present invention relates to a concrete mixer.

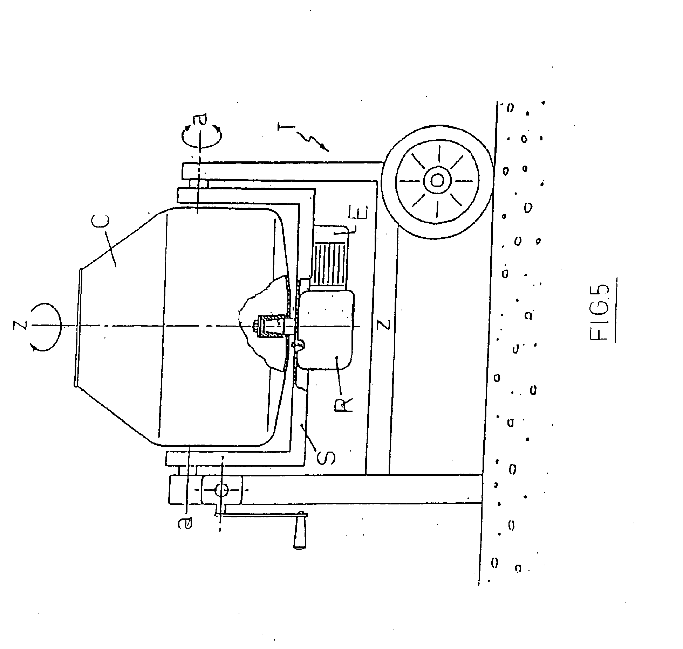

It is known that concrete mixers used in the building industry for preparing relatively limited amounts of mortar and mixings of various types basically comprise a drum inside which the mixing of selected components takes place. The drum is connected to a support structure by means of a drum-holder arm and is driven by a driving unit which causes it to rotate about its own axis. Said driving unit comprises an electric motor and a reduction gear which connects the shaft of the motor to the drum axle. The drum-holder arm is hinged to the support structure, so that it can rotate about a horizontal axis. Thus, the drum can rotate about its own axis, since it is connected to the driving unit, and can also rotate about the hinge axis of the drum-holder arm. Said driving motor unit can be mounted on the drum drum-holder as illustrated in the scheme of Fig.5. This scheme shows an electric motor (E) with a reduction gear (R), a drum (C) and a drum-holder arm (S). Lines (a-a) and (z-z) respectively represent the hinge axis of arm (S) on structure (T) and the rotation axis of drum (C).

The concrete mixers of the type described above causes inconveniences due to noise, to low mechanical efficiency and low reliability of the transmission by means of which the motor drives the drum and causes it to rotate. Moreover, the presence of the speed reducer requires very expensive high precision working techniques as well as suitable space for its positioning.

The main aim of the present invention is to eliminate or to remarkably reduce the above inconveniences.

These results have been achieved, according to the present invention thanks to a concrete mixer having the features described in claim 1. Further features of the present invention are the subject of the dependent claims.

Thanks to the present invention it is possible to realize a more silent running, more compact, more reliable and more economical concrete mixer which also features a higher mechanical efficiency and whose support structure can adequately be lightened. These and other advantages and characteristics of the invention will be best understood by anyone skilled in the art from a reading of the following description in conjunction with the attached drawings given as a practical exemplification of the invention, but not to be considered in a limitative sense, wherein:
- Fig. 1 is a schematic partially sectioned side view of a concrete mixer according to a possible embodiment of the present invention;
- Fig. 2 is an enlarged detail of Fig. 1;
- Fig. 3 a schematic partially sectioned side view of a concrete mixer according to a further embodiment of the present invention;
- Fig. 4 is an enlarged detail of Fig. 3;
- Fig. 5 shows a known type of concrete mixer.

A concrete mixer according to the present invention comprises a support structure (1), a drum (2), a drum-holder arm (3) joined to two studs (10) of structure (1) so that it can rotate about a horizontal axis (x-x) and an electric motor which determines the rotation of drum (2) about a corresponding rotation axis (y-y).

According to the present invention, said electric motor is directly connected to axis (y-y) of drum (2) without interposition of any reduction gear or any other type of transmission.

Moreover, advantageously, said electric motor (4) can be an electronically controlled permanent magnet brushless motor which allows the variation of the rotation rate within relatively broad limits and, if required, the reversal of the drum motion.

The structure and the operating features of the permanent magnet brushless motor are per se known, so they will not be described in a more detailed way.

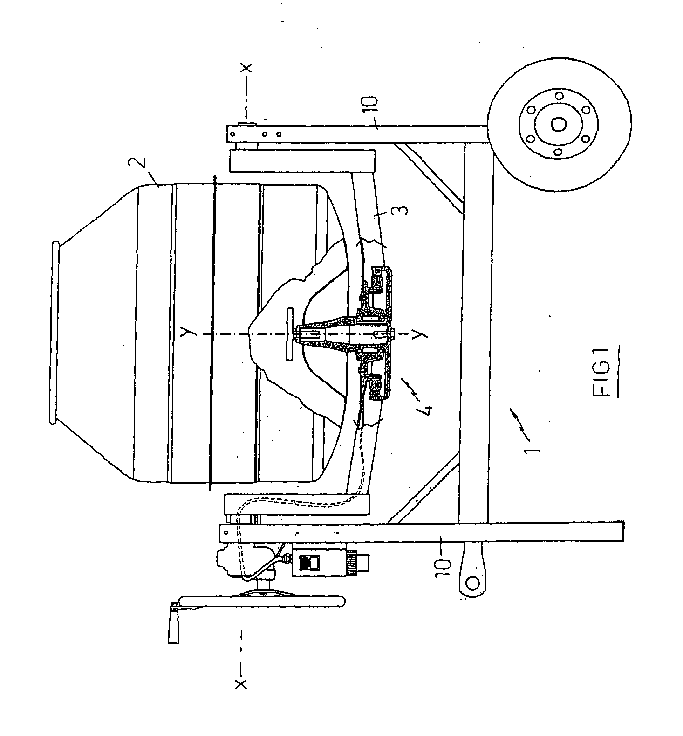

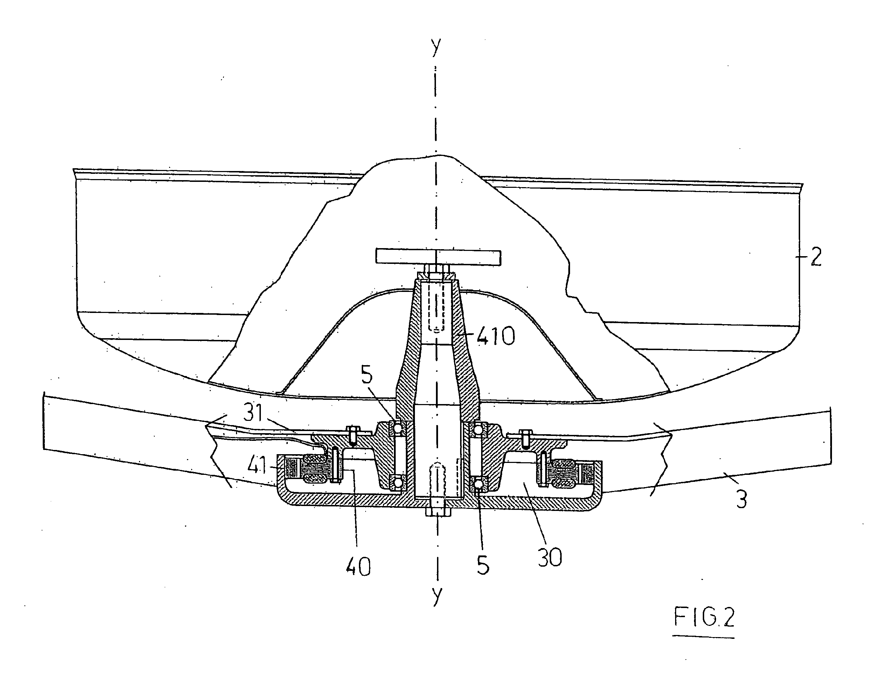

With reference to the example shown in Figs 1 and 2, motor (4) is external to drum (2). In this example, said arm (3) features an internal seat (30) in its central part, where motor (4) is positioned. In particular, stator (40) of motor (4) is fixed to a surface (31) of arm (3), the rotor (41) being mounted with its corresponding magnets external to those of stator (40). The central core of stator (40), i.e. the set of the relevant magnets, is mounted on the arm (3) and is coaxial to the central core of rotor (41), i.e. to the set of rotor magnets; bushings (5) are interposed between the stator and the rotor (41) and the latter extends along said axis (y-y) to form a shaft (410) on which drum (2) is fixed.

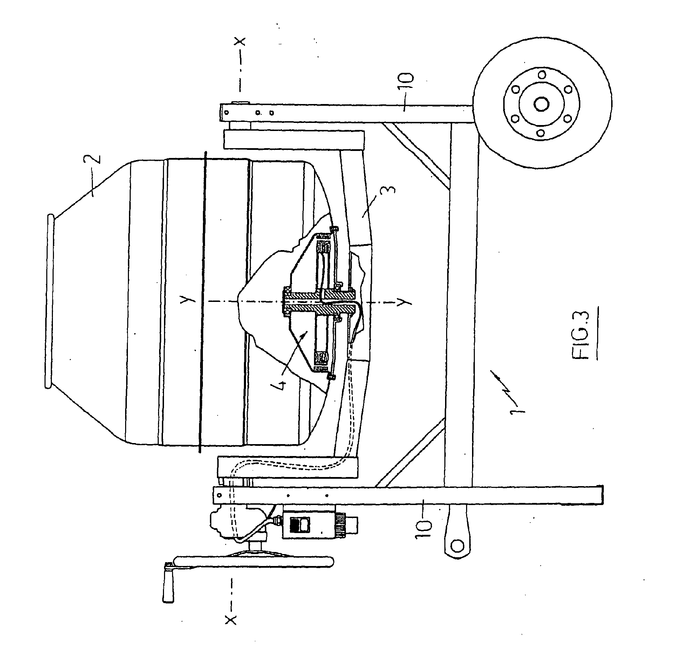

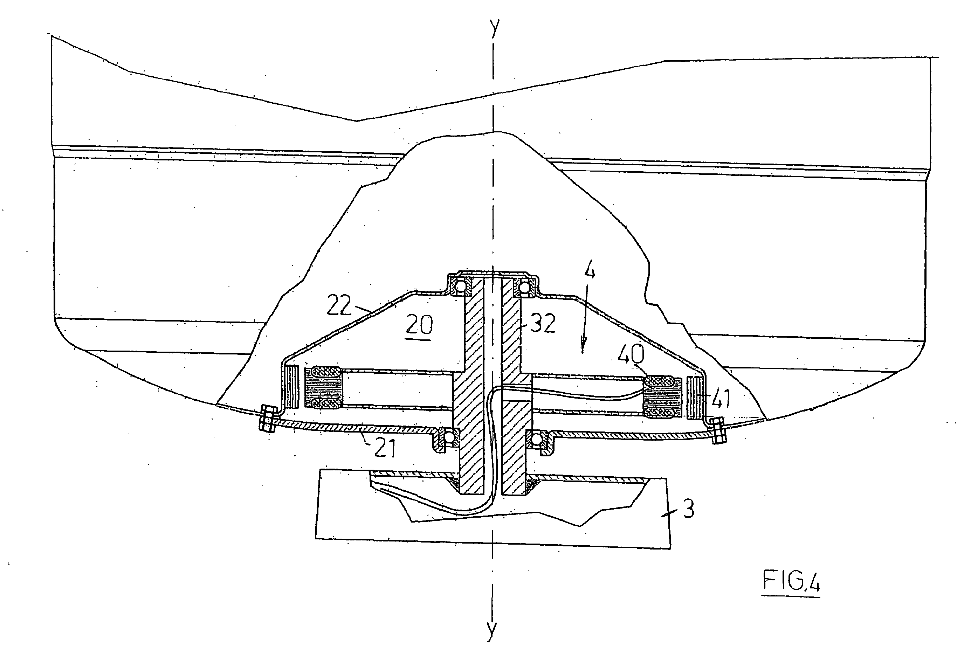

With reference to the examples shown in Fig. 3 and in Fig. 4, motor (4) is inside drum (2). In this example drum (2) features a seat (20), which is partly delimited by the drum bottom (21) and partly by a counter-bottom (22), inside which motor (4) is positioned. Said counter-bottom (22) isolates seat (20) from the materials in the drum which are in the drum during the mixing operation. In particular, the rotor is connected to an internal surface of said counter-bottom and the corresponding magnets are external to those of the stator. In conformity with the previous example, in Fig.4 the rotor magnets are indicated with reference numeral "41" and the stator magnets are indicated with reference numeral "40". Drum (2) is supported by arm (3) by means of a shaft (32) which extends along said axis (y-y) and on which the drum is mounted by interposing bushings allowing its rotation.

In both cases, motor (4) directly operates drum (2) without interposition of reducers or other types of transmissions.

It is possible to use any type of motor to operate drum (2). For example, it is possible to use a network frequency fed synchronous or asynchronous motor. Support (3) for drum (2) can be of any other suitable type, that is to say not necessarily arm-shaped as shown in the figures.

In practice, the execution details can vary as regards shape, arrangements and size of the single elements disclosed, without however departing from the scope of the concept on which the invention is based and remaining within the limits of the protection offered by the present patent.

## Claims

1. Concrete mixer comprising a support structure (1), a drum (2), a drum-holder (3) joined to structure (1) so that it can rotate about a horizontal axis (x-x), and an electric motor whose operation determines the rotation of the drum (2) about a corresponding rotation axis (y-y), **characterised in that** said electric motor (4) is directly connected on axis (y-y) of drum (2).

2. Concrete mixer according to claim 1 **characterised in that** said motor (4) is an electronically controlled permanent magnet brushless motor.

3. Concrete mixer according to claim 1 **characterised in that** said motor (4) is external to drum (2).

4. Concrete mixer according to claim 3 **characterised in that** said support (3) features an internal seat (30) in its central part in which said motor (4) is positioned.

5. Concrete mixer according to claim 1 **characterised in that** said motor (4) is inside drum (2).

6. Concrete mixer according to claim 5 **characterised in that** drum (2) features a seat (20), which is partly delimited by the drum bottom (21) and partly by a corresponding counter-bottom (22), inside which motor (4) is positioned.
